(19) Europäisches Patentamt
European Patent Office
Office européen des brevets

(11) EP 1 775 606 A1

(12) EUROPEAN PATENT APPLICATION
published in accordance with Art. 158(3) EPC

(43) Date of publication:
18.04.2007 Bulletin 2007/16

(51) Int Cl.:
G02B 5/22 (2006.01)          G02B 1/11 (2006.01)
G02B 1/10 (2006.01)          G09F 9/00 (2006.01)
H01J 11/02 (2006.01)

(21) Application number: 05768443.3

(22) Date of filing: 03.08.2005

(86) International application number:
PCT/JP2005/014183

(87) International publication number:
WO 2006/013880 (09.02.2006 Gazette 2006/06)

(84) Designated Contracting States:
AT BE BG CH CY CZ DE DK EE ES FI FR GB GR
HU IE IS IT LI LT LU LV MC NL PL PT RO SE SI
SK TR

(30) Priority: 03.08.2004  JP 2004227285

(71) Applicant: NOF CORPORATION
Tokyo 150-0013 (JP)

(72) Inventor: NOJIMA, Takayuki
4702316 (JP)

(74) Representative: Maiwald, Walter
Maiwald Patentanwalts GmbH
Elisenhof
Elisenstrasse 3
80335 München (DE)

(54) NEAR INFRARED RAY ABSORBING LAMINATED FILM FOR DISPLAY DEVICE

(57) A laminated film (10) includes a first interference layer (13) provided between a transparent resin film (11) and a near-infrared ray absorption layer (12). The laminated film (10) has a ripple-like reflectance curve. A maximum value of peak-to-peak amplitude of the reflectance curve is 1% or less in a range of 500 to 650 nm. A refractive index ($n_{I1}$) of the first interference layer (13) is expressed in the following formula:

$$n_{I1} = (n_s \times n_{NIRA})^{1/2} \pm 0.03$$

where $n_s$ represents the refractive index of the transparent resin film, and $n_{NIRA}$ represents the refractive index of the near-infrared ray absorption layer (12).

# Fig. 1(a)

## Description

Technical Field

The present invention relates to a laminated film having a near-infrared ray absorption function and a function of reducing uneven optical interference, and more particularly, relates to a laminated film to be attached on a screen of a display device such as a plasma display panel (PDP).

Background Art

Recently, thinning and upsizing of display devices for televisions, monitors, and the like have advanced. An example of a thin and large display device is a plasma display panel. A light emission body of a plasma display panel generates near-infrared ray. Near-infrared ray causes malfunctions of peripheral devices, such as a cordless phone. Therefore, plasma display panels are requested for a function of absorbing near-infrared ray from its light emission body.

A near-infrared ray absorption film using a dye and a pigment for absorbing near-infrared ray is known (see Patent Document 1). The conventional near-infrared ray absorption film includes a near-infrared ray absorption layer formed by coating a coating agent, in which a dye and a pigment which absorb near-infrared ray are dispersed in a resin, on a transparent resin film. The near-infrared ray absorption layer usually has a thickness of about 2 to 20 $\mu$m.

Patent Document 1: Japanese Patent Laid-Open Publication No. 11-305033

Disclosure of the Invention

However, the refractive index of a transparent resin film, and the refractive index of a near-infrared ray absorption layer are usually different mutually. In the near-infrared ray absorption film in which the near-infrared ray absorption layer having a thickness of 2 to 20 $\mu$m was laminated on a transparent resin film, optical interference arises and uneven optical interference like an oil film on water arises on the near-infrared ray absorption layer. Therefore, a conventional near-infrared ray absorption film has a problem of disfiguring a display device.

An object of the present invention is to provide a laminated film having a near-infrared ray absorption function and a function of reducing uneven optical interference.

In order to achieve the above-mentioned object, one aspect of the present invention provides a near-infrared ray absorptive laminated film including a transparent resin film, a first interference layer laminated on a surface of the transparent resin film, and a near-infrared ray absorption layer laminated on the above-described first interference layer. The near-infrared ray absorptive film has a reflectance spectrum expressed by a ripple-like reflectance curve having peak-to-peak amplitude, and a maximum value of the peak-to-peak amplitude is 1% or less in a wavelength range of 500 to 650 nm.

Brief Description of the Drawings

Figs. 1(a) and 1(b) are sectional views of laminated films according to preferred embodiments of the present invention;
Fig. 2 is a reflectance curve of a laminated film of a first example;
Fig. 3 is a reflectance curve of a laminated film of a third example; and
Fig. 4 is a reflectance curve of a laminated film of a first comparative example.

Best Mode for Carrying Out the Invention

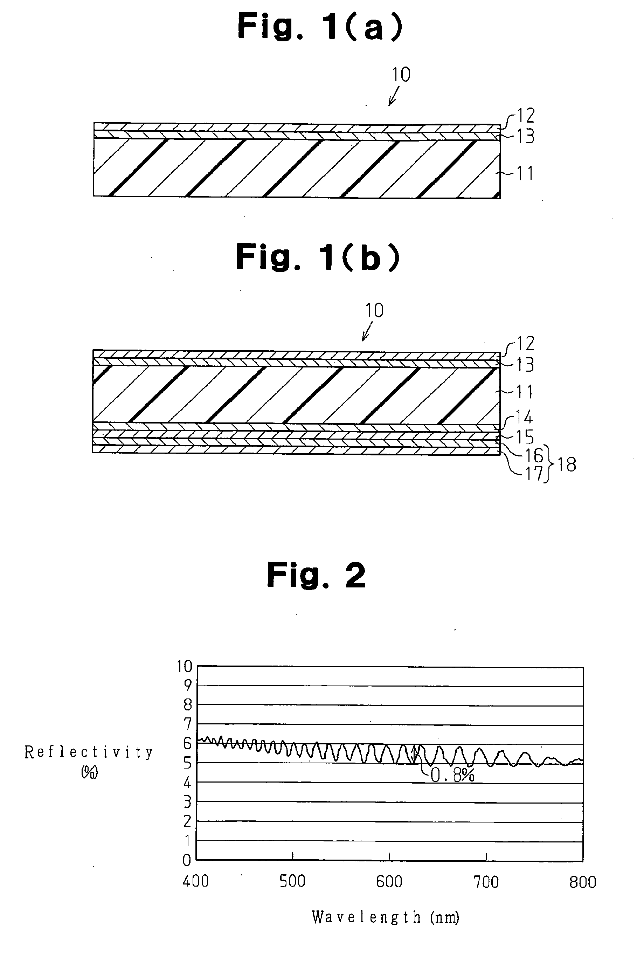

A near-infrared ray absorptive laminated film according to a preferred embodiment of the present invention will now be discussed with reference to Figs. 1 (a) and 1(b).

A laminated film 10 shown in Fig. 1(a) includes a first interference layer 13 laminated on a surface of a transparent resin film 11, and a near-infrared ray absorption layer 12 laminated on the first interference layer 13.

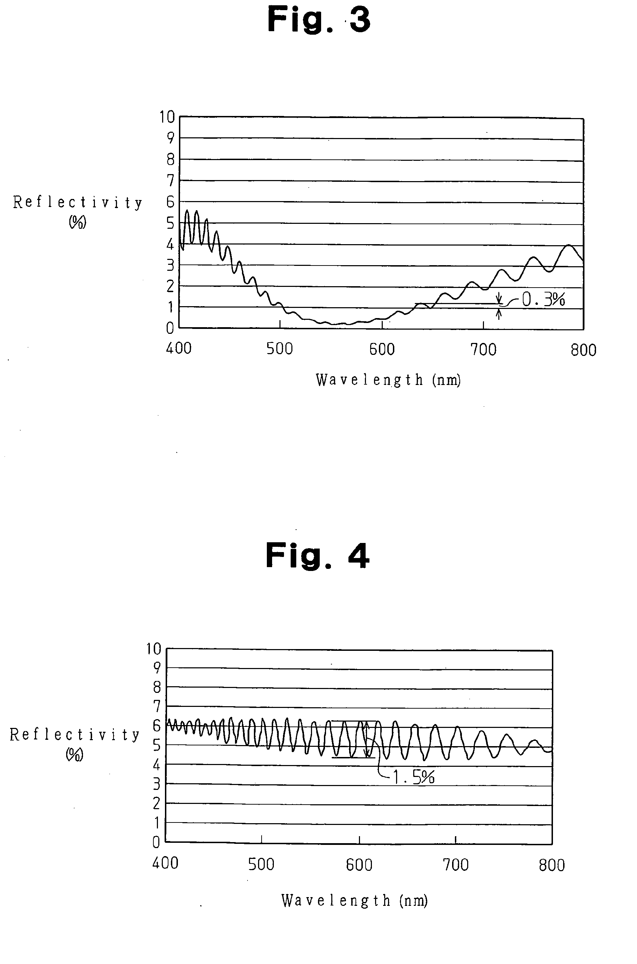

A reflectance of the laminated film 10 changes according to a wavelength. A reflectance spectrum of the laminated film 10 is expressed by a ripple-like reflectance curve (refer to Fig. 2). Peak-to-peak amplitude of the reflectance curve changes continuously with interference light arising between the near-infrared ray absorption layer 12 and transparent resin film 11. The peak-to-peak amplitude is difference between a maximal value and a minimal value of the reflectance curve, and is calculated or measured from a reflection spectrum on the surface of the laminated film 10. In the laminated film 10 of the present invention, a maximum value of the peak-to-peak amplitude of the reflectance curve is 1% or less in a wavelength range of 500 to 650 nm. Optical interference is conspicuous when the maximum value exceeds 1%. In the laminated films 10 in the first and third examples shown in Figs. 2 and 3, maximum values of peak-to-peak amplitude of reflectance curves in a wavelength range of 500 to 650 nm are 0.8% and 0.3% respectively. It is possible for those skilled in the art to change a structure of the laminated film 10 adequately so that the maximum value concerned may become 1% or less. For example, the maximum value concerned can be adjusted by adjusting the refractive index and an optical film thickness of each layer of the laminated film 10. The refractive index of each layer can be adjusted by selecting of its material (composition) and structure (microscopic and macroscopic). A reflectance of the laminated film 10 refers to a reflectance on a surface (a uppermost surface in Fig. 1(a)) of the near-infrared ray absorption layer 12, and is not a reflectance on the backside (a lowermost surface in Fig. 1(a)) of the transparent resin film 11. It is preferable that the maximum value of the peak-to-peak amplitude of the reflectance curve is 0.5% or less.

The transparent resin film 11 is formed from a transparent resin material having a refractive index (n) of 1.55 to 1.70. Examples of a preferable material are polyethylene terephthalate (PET, n = 1.65), polycarbonate (PC, n = 1.59), polyarylate (PAR, n = 1.60), and polyethersulfone (PES, n = 1.65). A preferable thickness of the transparent resin film 11 is 25 to 400 $\mu$m, and a further preferable thickness is 50 to 200 $\mu$m. When the thickness of the transparent resin film 11 becomes less than 25 $\mu$m or exceeds 400 $\mu$m, it is hard to produce and deal with the laminated film 10. It is possible for those skilled in the art to adequately select a material having the above-mentioned refractive index and thickness.

It is desirable to contain an ultraviolet absorber in the transparent resin film 11 so as to protect from an ultraviolet ray the near-infrared absorbent contained in the near-infrared ray absorption layer 12. A dosage of an ultraviolet absorber is adjusted so that a light transmission of ultraviolet ray at 380 nm or less to the transparent resin film 11 may become 5% or less. As for the dosage of an ultraviolet absorber, it is more preferable to be 3% by mass or less in the transparent resin film 11, and it is particularly preferable to be 1% by mass or less. When a light transmission at a wavelength of 380 nm or less exceeds 5%, an ultraviolet shielding effect is insufficient, and it is not preferable since the near-infrared ray absorption layer 12 receives much ultraviolet ray.

On the transparent resin film 11, the first interference layer 13 and near-infrared ray absorption layer 12 are laminated. In order to reduce occurrence of uneven optical interference, it is preferable that the refractive index and film thickness of the near-infrared ray absorption layer 12 are 1.45 to 1.65, and 2 to 20 $\mu$m, respectively. It is preferable that the refractive index ($n_{I1}$) of the first interference layer 13 is expressed in the following formula.

$$n_{I1} = (n_s \times n_{NIRA})^{1/2} \pm 0.03$$

where $n_s$ is the refractive index of the transparent resin film 11, and $n_{NIRA}$ is the refractive index of the near-infrared ray absorption layer 12.

It is preferable that an optical film thickness of the first interference layer 13 is 125 to 165 nm. It is preferable that the refractive index of the first interference layer 13 is a middle value between the refractive index of the transparent resin film 11 and the refractive index of the near-infrared ray absorption layer 12. Thus, (i) refractive index of transparent resin film 11 > refractive index of first interference layer 13 > refractive index of near-infrared ray absorption layer 12, or (ii) refractive index of near-infrared ray absorption layer 12 > refractive index of first interference layer 13 > refractive index of transparent resin film 11. An optical film thickness is a product (n $\times$ d) of the refractive index (n) of a layer, and a thickness (d) of the layer.

It is more preferable that the refractive index ($n_{I1}$) of the first interference layer 13 fulfills the following formula.

$$n_{I1} = (n_s \times n_{NIRA})^{1/2} \pm 0.02$$

where $n_s$ is the refractive index of the transparent resin film 11, and $n_{NIRA}$, is the refractive index of the near-infrared ray absorption layer 12. When the refractive index $n_{I1}$ is $(n_s \times n_{NIRA})^{1/2}$, optical interference in the laminated film 10 is mostly reduced. When the refractive index and optical film thickness of the first interference layer 13 do not comply with the above-described requirements, and when the refractive index of the near-infrared ray absorption layer 12 does not comply with the above-described requirements, a reduction effect of interference unevenness is low. When a film thickness of the near-infrared ray absorption layer 12 is less than 2 $\mu$m, it is difficult to exert sufficient near-infrared ray absorption performance. When the film thickness exceeds 20 $\mu$m, flexibility of the laminated film 10 lowers.

It is possible for those skilled in the art to adequately select a material and a method which are suitable for forming the first interference layer 13 having a refractive index and a thickness within the above-mentioned range. Examples of the material which forms the first interference layer 13 are organic substances such as (meta)acrylate, inorganic substances such as a silicon compound, and mixtures thereof.

The first interference layer 13 may have a function of adhering to the transparent resin film 11 or near-infrared ray absorption layer 12. At the same time of producing the transparent resin film 11 by a drawing or a casting from a resin material, the first interference layer 13 may be formed on a surface of the transparent resin film 11. For example, in the case that the transparent resin film 11 is made from PET, when coating an adhesive which is made from a polyester base resin and the like on a surface of a PET film in in-line at the time of producing a PET film 11 so that a refractive index and a film thickness of a layer of the adhesive may comply with the requirements of the first interference layer 13 so as to increase adhesion between the transparent resin film 11 and an adjacent layer, it is preferable because the layer of the adhesive concerned functions as the first interference layer 13.

It is possible for those skilled in the art to adequately select a material and a method which are suitable for forming the near-infrared ray absorption layer 12 having a refractive index and a thickness within the above-mentioned range.

Generally, since the near-infrared absorbent is unstable, it is preferable to form the near-infrared ray absorption layer 12 by dissolving or dispersing the near-infrared absorbent to an organic binder. Examples of a preferable organic binder are polyester resin and a polycarbonate resin. Refractive indices of the polyester resin and polycarbonate resin are 1.58 to 1.60.

In order to increase, for example, color purity and contrast of luminescent colors (visible light) of a display panel, it is desirable that the near-infrared ray absorption layer 12 contains a pigment that corrects color tone. Examples of the pigment are pigments of squaryliums, azomethines, cyanines, xanthenes, azo compounds, tetraazaporphyrins, and pyrromethenes.

As for the laminated film 10 in Fig. 1(b), on a first surface of the transparent resin film 11, the first interference layer 13 and near-infrared ray absorption layer 12 are laminated. On a second surface of the transparent resin film 11, a second interference layer 14, a hard coat layer 15, a high refractive index layer 16, and a low refractive index layer 17 are laminated in order. The high refractive index layer 16 and low refractive index layer 17 function as an anti-reflecting layer 18. In an example in Fig. 1(b), the near-infrared ray absorption layer 12 absorbs an unnecessary near-infrared ray, the anti-reflecting layer 18 reduces reflection of outdoor daylight, and the second interference layer 14 reduces uneven optical interference derived from the hard coat layer 15.

In order to reduce the interference unevenness in the hard coat layer 15, it is preferable that the hard coat layer 15 has a refractive index of 1.45 to 1.55 and a film thickness of 1 to 20 $\mu$m. It is more preferable that the refractive index ($n_{I2}$) of the second interference layer 14 is expressed in the following formula.

$$n_{I2} = (n_s \times n_{NIRA})^{1/2} \pm 0.03$$

where $n_s$ is the refractive index of the transparent resin film 11, and $n_{NIRA}$ is the refractive index of the hard coat layer 15. It is desirable that an optical film thickness of the second interference layer 14 is 125 to 165 nm. It is preferable that the refractive index of the second interference layer 14 is a middle refractive index between the refractive index of the transparent resin film 11 and the refractive index of the hard-coat layer 15. Namely, refractive index of transparent resin film 11 > refractive index of second interference layer 14 > refractive index of hard coat layer 15 is preferable.

It is more preferable that the refractive index ($n_{I2}$) of the second interference layer 14 is expressed in the following formula.

$$n_{I2} = (n_s \times n_{NIRA})^{1/2} \pm 0.02$$

When the refractive index $n_{I2}$ of the second interference layer 14 is equal to $(n_s \times N_{NIRA})^{1/2}$, interference unevenness reduction effect becomes maximum. When the refractive index $n_{12}$ is substantially equal to $(n_s \times n_{NIRA})$ and $(\pm 0.03)$ and refractive index of transparent resin film 11 > refractive index of second interference layer 14 > refractive index of hard coat layer 15, interference unevenness is effectively reduced.

When the refractive index and optical film thickness of the second interference layer 14 do not comply with the above-described requirements, the reducing effect of interference unevenness becomes small, and hence, it is not preferable. When the refractive index of the hard coat layer 15 is less than 1.45, it becomes necessary to have to add an expensive, comparatively soft material with a low refractive index so as to form the hard coat layer 15, and hence, there arise problems of decreasing of hardness, cost increase, and the like. When the refractive index exceeds 1.55, refractive index difference from the transparent resin film 11 becomes small, and hence, a reflection-reducing effect lowers. When the film thickness of the hard coat layer 15 is below 1 $\mu$m, hardness of the laminated film 10 is insufficient. When the film thickness of the hard coat layer 15 exceeds 20 $\mu$m, flexibility of the laminated film 10 lowers.

It is possible for those skilled in the art to adequately select a material, a layer structure, and a method which are suitable for forming the second interference layer 14 having the refractive index and thickness within the above-mentioned range. The second interference layer 14 can be formed from a material which is the same kind as that of the material which forms the first interference layer 13. The optical film thickness of the second interference layer 14 may be approximately the same as that of the optical film thickness of the first interference layer 13.

The second interference layer 14 may have a function of increasing adhesion between the transparent resin film 11 and hard-coat layer 15. At the same time of producing the transparent resin film 11 by a drawing or a casting, the second interference layer 14 may be formed on a surface of the transparent resin film 11. For example, in the case that the transparent resin film 11 is made from PET, when coating an adhesive which is made from a polyester base resin and the like on a surface of a PET film in in-line at the time of producing the PET film 11 so that a refractive index and a film thickness of a layer of the adhesive may comply with the requirements of the second interference layer 14 so as to increase adhesion between the transparent resin film 11 and an adjacent layer, it is preferable because it is possible to use the layer of the adhesive concerned instead of the second interference layer 14.

It is possible for those skilled in the art to adequately select a material and a method which are suitable for forming the hard-coat layer 15 having a refractive index and a thickness within the above-mentioned range. A preferable material of the hard coat layer 15 is a cured polymer of a composition containing ultraviolet-curable polyfunctional (meta) acrylate.

Examples of the ultraviolet-curable polyfunctional (meta)acrylates are (meta)acrylic derivatives of polyfunctional alcohol, such as dipentaerythritol hexa(meta)-acrylate, tetramethylolmethane tetra(meta)-acrylate, tetramethylolmethane tri(meta)-acrylate, trimethylolpropane tri(meta)-acrylate, 1, 6-hexanediol di(meta)-acrylate, and 1, 6-bis-(3-acryloyloxy-2-hydroxypropyloxy-)hexane, polyethyleneglycol di(meta)-acrylate, and polyurethane (meta)acrylate.

A composition containing the ultraviolet-curable polyfunctional (meta)acrylate contains acrylate concerned and other ingredients. Examples of other ingredients are inorganic or organic particle fillers, inorganic or organic particle pigments and other inorganic or organic particles, polymers, polymerization initiators, polymerization inhibitors, antioxidizing agents, dispersing agents, surfactants, light stabilizers, leveling agents, and solvents. When forming the hard coat layer 15 by a wet coating method using a composition containing a solvent, it is preferable that an amount of the solvent is an amount removable by drying after film formation.

The reflection-reducing layer 18 may be either a single layer structure or a multi-layer structure. The reflection-reducing layer 18 with a single layer structure is laminated on the hard coat layer 15, and contains one layer (low refractive index layer) having a refractive index lower than the refractive index of the hard coat layer 15. The reflection-reducing layer 18 with a multi-layer structure contains several layers with different refractive indices which are laminated on the hard coat layer 15. A multi-layer structure is suitable for reducing reflectance more effectively. Examples of the reflection-reducing layer 18 are a two-layer structure which is constructed of a high refractive index layer 16 and a low refractive index layer 17 which are formed sequentially from a side near the hard coat layer 15, a three-layer structure which is constructed of a middle refractive index layer, a high refractive index layer, and a low refractive index layer, and a four layer structure which is constructed of a high refractive index layer, a low refractive index layer, a high refractive index layer, and a low refractive index layer.

The reflection-reducing layer 18 can be formed by a publicly-known method such as a wet coating method.

In order to make the reflection-reducing layer 18 exert its function, it is preferable that the refractive index of the low refractive index layer 17 is lower than a refractive index of a layer (for example, hard coat layer 15) adhering to the low refractive index layer 17. A preferable refractive index of the low refractive index layer 17 is 1.35 to 1.50. When the refractive index exceeds 1.50, it is difficult to obtain a sufficient reflection-reducing effect by a wet coating method. When the refractive index is less than 1.35, hardness of the low refractive index layer 17 is insufficient.

When the reflection-reducing layer 18 has the two-layer structure, the refractive index of the high refractive index layer 16 needs to be higher than the refractive index of the low refractive index layer 17. Therefore, it is preferable that the refractive index of the high refractive index layer 16 is 1.60 to 1.90. It is hard to obtain a sufficient reflection-reducing effect when the refractive index of the high refractive index layer 16 is less than 1.60. It is hard to form the high refractive index layer 16 with a refractive index exceeding 1.90 by the wet coating method.

When the reflection-reducing layer 18 has the multi-layer structure containing the middle refractive index layer, what is necessary is that the refractive index of the middle refractive index layer is lower than the refractive index of the high refractive index layer, and is higher than the refractive index of the low refractive index layer. It is possible for those skilled in the art to adequately select a material which is suitable for forming the reflection-reducing layer 18 having the multi-layer structure.

A thickness of the reflection-reducing layer 18 changes according to a kind and a form of the transparent resin film 11, and a structure of the reflection-reducing layer 18. It is preferable that a thickness of one layer of the reflection-reducing layer 18 is the same as or less than a wavelength of visible rays. As for an example of a layer structure of the reflection-reducing layer 18 which exerts the reflection-reducing effect on visible rays, an optical film thickness $n_H \cdot d$ of the high refractive index layer 16 fulfills $500 \, nm \leq 4n_H \cdot d \leq 750 \, nm$, and an optical film thickness $n_L \cdot d$ of the low refractive index layer 17 fulfills $400 \, nm \leq 4n_L \cdot d \leq 650 \, nm$. $n_H$ and $n_L$ denote the refractive indices of the high refractive index layer 16 and the low refractive index layer 17 respectively, and d denotes a layer thickness (nm).

The high refractive index layer 16 can be formed from an inorganic material or an organic material. What can be used as the inorganic material are particles of zinc oxide, titanium oxide, cerium oxide, aluminum oxide, tantalum oxide, yttrium oxide, ytterbium oxide, zirconium oxide, indium-tin oxide (hereafter, abbreviated to ITO), and the like. Conductive particles such as ITO are preferable since they decrease surface resistivity of a laminated film and add antistatic ability. Inorganic materials preferable in respect of electroconductivity are tin oxide and ITO. Inorganic materials preferable in respect of a refractive index are titanium oxide, cerium oxide, and zinc oxide. The high refractive index layer 16 may be an organic layer obtained by polymerization curing of a composition containing polymeric monomers whose refractive indices are 1.60 to 1.80.

The high refractive index layer 16 containing inorganic particles can be formed by the wet coating method. In that case, it is possible to perform the wet coating using as a binder a composition containing polymeric monomers whose above-mentioned refractive indices are 1.60 to 1.80, other polymeric monomers, and their polymer. It is preferable that an average particle size of inorganic particles does not exceed a thickness of a high refractive index layer largely, and in particular, it is preferable to be 0.1 $\mu$m or less. Since particles with a large average particle size may cause diffusion and may lower optical performance of the high refractive index layer 16, they are not preferable. Surfaces of particles may be modified with a coupling agent. Examples of the coupling agent are silicon compounds replaced by organic groups, alkoxide and organic acid salts of metals, such as aluminum, titanium, zirconium, and antimony.

The low refractive index layer 17 can be formed from an inorganic substance, such as silicon oxide, lanthanum fluoride, magnesium fluoride, or cerous fluoride, a sole monomer containing fluorine (hereinafter, a fluorine-containing monomer(s)) or a mixture of the fluorine-containing monomers, a composition containing a polymer of fluorine-containing monomer. It is possible to use as a binder monomers not containing fluorine (hereinafter, a non-fluoro monomer(s)), and their polymer. Examples of the fluorine-containing monomer are, for example, monomers of fluorine-containing monofunctional (meta)acrylate, fluorine-containing polyfunctional (meta)acrylate, fluorine-containing itaconic acid ester, fluorine-containing maleate, a fluorine-containing silicon compound, and the like. Among these, fluorine-containing (meta) acrylate is preferable from the aspect of reactivity, and in particular, fluorine-containing polyfunctional (meta)acrylate is most preferable from the respect of a hardness and a refractive index. It is possible to form a layer with a low refractive index and a high hardness by curing these fluorine-containing organic compounds.

Examples of fluorine-containing monofunctional (meta)acrylate are 1-(meta)acryloyloxy-1-perfluoro alkyl methane, and 1-(meta)acryloyloxy-2-perfluoro alkyl ethane. Examples of the perfluoro alkyl group are perfluoro alkyl groups having the carbon number of 1 to 8, and being linear, branched, or annular.

Examples of the fluorine-containing polyfunctional (meta)acrylate are fluorine-containing bifunctional (meta) acrylate, fluorine-containing trifunctional (meta)acrylate, and fluorine-containing tetrafunctional (meta)acrylate. Examples of the fluorine-containing bifunctional (meta)acrylate are 1, 2-di(meta)-acryloyloxy-3-perfluoro alkylbutane, 2-hydroxy-1H, 1H, 2H, 3H, 3H-perfluoro alkyl-2',2'-bis{(meta)acryloyloxymethyl} propionate, and $\alpha$, $\omega$-di(meta)-acryloyloxymethyl perfluoroalkane. A preferable perfluoro alkyl group has the carbon number of 1 to 11, and is linear, branched, or annular. A preferable perfluoro alkyl group is linear.

An example of the fluorine-containing trifunctional (meta)acrylate is 2-(meta)acryloyloxy-1H, 1H, 2H, 3H, 3H-perfluoroalkyl-2',2'-bis {(meta)acryloyloxymethyl}propionate. A preferable perfluoro alkyl group has the carbon number of 1 to 11, and is linear, branched, or annular. An example of the fluorine-containing tetrafunctional (meta)acrylate is $\alpha$, $\beta$, $\phi$, $\omega$-tetrakis {(meta)acryloyl oxy}-$\alpha$H, $\alpha$H, $\beta$H, $\gamma$H, $\gamma$H, $\chi$H, $\chi$H, $\phi$H, $\omega$H, $\omega$H-perfluoroalkane. A preferable perfluoro alkyl group has the carbon number of 1 to 14, and is linear.

An example of the fluorine-containing silicon compound is (1H, 1H, 2H, 2H-perfluoro alkyl) trimethoxysilane. A preferable perfluoro alkyl group has the carbon number of 1 to 10, and is linear, branched, or annular.

Examples of the organic or inorganic particles which form the low refractive index layer 17 are particles of silicon oxide and particles of an organic polymer. A preferable average particle size of particles is 0.1 $\mu$m or less. Surfaces of the particles may be modified with the coupling agent if needed. Examples of the coupling agent are silicon compounds replaced by organic groups, alkoxide and organic acid salts of metals, such as aluminum, titanium, zirconium, and antimony. Particulates having the surfaces modified with reactive groups, such as a (meta)acryloyl group, are preferable since it is possible to form a film with a high hardness.

In addition to the above-mentioned ingredients, the reflection-reducing layer 18 can include other ingredients. It is possible for those skilled in the art to select adequately kinds and amounts of the other ingredients. Examples of other ingredients are inorganic or organic pigments, polymers, polymerization initiators, photopolymerization initiator, polymerization inhibitors, antioxidizing agents, dispersing agents, surfactants, light stabilizers, leveling agents, and solvents. When forming the reflection-reducing layer 18 by the wet coating method using a composition containing a solvent, it is preferable that an amount of the solvent is an amount removable by drying after film formation. The reflection-reducing layer 18 can be formed by curing the layer, formed as a film by the wet coating method, by radiation and heating of active energy ray such as ultraviolet ray and electron ray if needed. It is preferable to perform the curing by active energy ray radiation under an atmosphere of an inert gas such as nitrogen or argon.

It is possible to laminate an adhesive layer on the near-infrared ray absorption layer 12 so as to adhere the near-infrared ray absorption layer 12 of the laminated film 10 to another member (e.g., a screen of a display device). It is possible for those skilled in the art to adequately select a material which is suitable for forming the adhesive layer. Examples of the material of the adhesive layer are, for example, an acrylic pressure sensitive adhesive, a UV cure adhesive, and a thermosetting adhesive. This adhesive layer can have an optical absorption function, a contrast enhancement function, and a color tone correcting function in a specified wavelength region. For example, if a transmitted light color through the laminated film 10 is not preferable, for example, it is yellowish, an adhesive layer containing a pigment for correcting color tone can be used.

The laminated film 10 is suitable for attaching it to a screen of a display device such as a CRT display, a plasma display panel, or a liquid crystal display device. The laminated film 10 is attached to a display device by adhering the near-infrared ray absorption layer 12 to a screen.

A production method of the laminated film 10 in Fig. 1(a) will be discussed. Coating liquid for interference layer formation is coated on the transparent resin film 11 (e.g., made from PET). An amount of coating liquid is adjusted so that the interference layer 13 having a predetermined optical film thickness may be formed. After drying the coating liquid, ultraviolet rays are radiated for the coating liquid to be cured, and the first interference layer 13 is formed. The near-infrared ray absorption layer 12 is formed by coating the coating liquid for near-infrared ray absorption layer formation on the first interference layer 13 succeedingly, and drying the coating liquid. Thus, the laminated film 10 in Fig. 1(a) is completed.

An example of use of the laminated film 10 in Fig. 1(a) will be discussed.

The laminated film 10 is attached to a screen of a display device such as a plasma display panel. It is possible to attach the near-infrared ray absorption layer 12 on the screen using an adhesive layer.

The laminated film 10 attached to the screen of the display device receives display light including near-infrared ray from the screen of the display device. The near-infrared ray (850 to 1100 nm) among the display light is almost absorbed by the near-infrared ray absorption layer 12. The first interference layer 13 reduces generation of uneven optical interference resulting from reflected light reflected on a surface of the near-infrared ray absorption layer 12, and a surface of the transparent resin film 11.

A production method of the laminated film 10 in Fig. 1(b) will be discussed.

Similarly to the production method of the laminated film 10 in Fig. 1(a), the transparent resin film 11, first interference layer 13, and near-infrared ray absorption layer 12 are laminated. In the transparent resin film 11, the coating liquid for interference layer formation is coated on a surface (backside) opposite to the first interference layer 13. An amount of the coating liquid is adjusted so that the interference layer 14 having a predetermined optical film thickness may be formed. After drying the coating liquid, ultraviolet rays are radiated for the coating liquid to be cured, and the second interference layer 14 is formed. Succeedingly, the coating liquid for hard coat layer formation is coated on the second interference layer 14, ultraviolet rays are radiated for the coating liquid to be cured, and the hard coat layer 15 is formed. By coating the coating liquid for high refractive index layer formation and the coating liquid for low refractive index layer formation on the hard coat layer 15 in order, and drying and curing them, the reflection-reducing layer 18 including the high refractive index layer 16 and low refractive index layer 17 is formed. Thus, it is possible to produce the laminated film 10, which has reflection-reducing property, in Fig. 1(b).

It is possible to use the laminated film 10 in Fig. 1(b) with bonding the near-infrared ray absorption layer 12 on a screen of a display device. Reflection of outdoor daylight which is incident toward a display device from the exterior is reduced by the reflection-reducing layer 18. In detail, overall reflection is suppressed by an interference action of light reflected in each interface of the low refractive index layer 17 and high refractive index layer 16. A transmittance of display light of a display device is improved by the optical interference action at the time of passing the high refractive index layer 16 and low refractive index layer 17. The second interference layer 14 reduces interference unevenness between the transparent resin film 11 and hard coat layer 15. By the laminated film 10 reducing reflection of outdoor daylight, improving the transmittance of the display light, and reducing the interference unevenness, the screen of the display device becomes bright and visibility is improved.

According to the laminated film 10 of the preferred embodiment, the following advantages are obtained.

The laminated film 10 includes the first interference layer 13 and near-infrared ray absorption layer 12 which are laminated on a surface of the transparent resin film 11. A maximum value of the peak-to-peak amplitude of the reflectance curve of the laminated film 10 is 1% or less in a wavelength range of 500 to 650 nm. Near-infrared ray is absorbed by the near-infrared ray absorption layer 12. By the first interference layer 13 arranged between the transparent resin film 11 and near-infrared ray absorption layer 12, interference unevenness such as an oil film resulting from reflected light on a surface of the near-infrared ray absorption layer 12 and reflected light on a surface of the transparent resin film 11 is reduced.

The transparent resin film 11, near-infrared ray absorption layer 12, and first interference layer 13 have refractive indices specified so that interference unevenness may be reduced effectively. Therefore, the laminated film 10 has interference unevenness reduction effect.

It is possible to use a polyethylene terephthalate film having a film thickness of 25 to 400 $\mu$m, which is easy to deal, as the transparent resin film 11. For this reason, production and use of the laminated film 10 are easy. The transparent resin film 11 can contain an ultraviolet absorber so that transmittance of ultraviolet ray at 380 nm or less may become 5% or less. In this case, it is possible to protect the near-infrared ray absorption layer 12 from ultraviolet ray, and to increase durability of the laminated film 10.

The near-infrared ray absorption layer 12 can contain a pigment that corrects color tone. In this case, color purity and contrast of luminescent colors on a screen of a display device are improved.

The laminated film 10 including the reflection-reducing layer 18 has a near-infrared ray absorption function and a reflection-reducing function. The laminated film 10 including the hard coat layer 15 and second interference layer 14 having the specified refractive indices has a function of reducing uneven optical interference, and an improved reflection-reducing function. The laminated film 10 is suitable for use for a large-sized plasma display panel on which a background is reflected easily for visibility to reduce easily. When using the laminated film 10 in Fig. 1(b), it is possible to increase the visibility of a large-sized plasma display panel.

A display device to the screen of which the laminated film 10 is attached, and in particular, a plasma display panel has little interference unevenness by optical interference to be excellent in appearance. The laminated film 10 prevents near-infrared ray, emitted from a display device, from causing malfunction of remote control operation and the like. Since reflection on a screen is suppressed by the reflection-reducing layer 18, it is possible to obtain a clear image.

The hard coat layer 15 having a thickness of 1 to 20 $\mu$m gives excellent hardness, which is endurable to use, to the laminated film 10. Therefore, it is easy to attach the laminated film 10 to a screen of a display panel.

An example of the preferred embodiment will be discussed. First, measurement of refractive indices of cured substances of coating liquids for near-infrared ray absorption layer formation, and reflection-reducing layer formation will be discussed.

The coating liquid for near-infrared ray absorption layer formation and the coating liquid for reflection-reducing layer formation were coated sequentially on a surface of an acrylic resin plate (trade name: "DELAGLAS A", manufactured by Asahi Kasei Corporation) with a refractive index of 1.49 with a dip coater (manufactured by SUGIYAMAGEN RIKAGAKUKIKI KABUSHIKI KAISHA). An amount of each coating liquid is adjusted so that a layer having an optical film thickness of approximately 550 nm after drying may be formed. Solvents were removed from the layers of the coating liquids and dry films were formed. By radiating ultraviolet ray at 400 mJ using a 120-W high pressure mercury lamp under a nitrogen ambient atmosphere with an ultraviolet irradiation apparatus (manufactured by Iwasaki Electric Co., Ltd.) if needed, the coating film (the near-infrared ray absorption layer or reflection-reducing layer) was cured.

In the acrylic resin plate, an opposite side of surface (backside) was given surface roughing with sandpaper for the coating film, and was painted over with black, and a laminated plate sample was produced. Reflectivity ($\pm 5°$ regular reflectance) of the laminated plate sample at a wavelength of 400 to 650 nm was measured with a spectrophotometer (trade name: "U-best 50", manufactured by JASCO Corp.). A minimal value or a maximal value of the reflectance was read. A refractive index of each layer was calculated from the extremal value of the reflectance using the following formula.

$$\text{Extremal value of reflectance (\%)} = \{\frac{(\text{refractive index of acrylic resin plate}) - (\text{refractive index of layer})^2}{(\text{refractive index of acrylic resin plate}) + (\text{refractive index of layer})^2}\}^2 \times 100$$

The physical properties of the laminated film were measured by the methods shown below.

1) Spectral reflectance

Case of laminated film having structure in Fig. 1(a)

A backside (transparent resin film side) of the laminated film 10 was given surface-roughing with sandpaper, and was painted over with black, and a laminated plate sample was produced. The reflection spectrum ($\pm 5°$ regular reflection spectrum) of the laminated plate sample was measured. A measuring range is 400 to 800 nm. Thereby, a reflection spectrum of the near-infrared ray absorption layer 12 is computable.

Case of laminated film having structure in Fig. 1(b)

The near-infrared ray absorption layer 12 was given surface-roughing with sandpaper, and was painted over with black, and a laminated plate sample was produced. The reflection spectrum ($\pm 5°$ regular reflection spectrum) of the laminated plate sample was measured. A measuring range is 400 to 800 nm. Thereby, a reflection spectrum of the reflection-reducing layer 18 is obtained. Minimum reflectance (%) was calculated from the reflection spectrum.

2) Total transmittance and haze value

Total transmittance (%) and a haze value (%) were measured using a haze meter (trade name: "NDH2000", manufactured by Nippon Denshoku Industries Co., Ltd.).

3) Intensity of optical interference

A reflectance width of interference in the vicinity of 600 nm was read from the reflection spectrum obtained by the spectral reflectance measurement, and degree (%) of optical interference was calculated.

4) Appearance

Appearance of the laminated films was observed under a three-wavelength fluorescent lamp. A case where optical interference fringes were observed clearly was marked as $\times$ (poor), and a case where interference fringes were hardly observed was marked as O (good).

5) Near-infrared transmittance

A transmission spectrum was measured using a spectrophotometer (trade name: "UV-1600PC", manufactured by Shimadzu Corp.), and transmittance (%) at optical wavelengths of 850 nm, 950 nm, and 1100 nm was measured.

Production example 1-1: Preparation of coating liquid (IF-1) for interference layer formation

Coating liquid (IF-1) for interference layer formation was prepared by solving or dispersing 20 parts by mass of dipentaerythritol hexaacrylate, 10 parts by mass of tetramethylolmethane triacrylate, 70 parts by mass of tin oxide particles with an average particle size of 0.05 $\mu$m, and 2 parts by mass of photopolymerization initiator (trade name: "IRGACURE907", manufactured by Nihon-Ciba Geigy K.K.) in 1000 parts by mass of 2-butanol. A refractive index of the cured substance was 1.61.

Production example 1-2: Preparation of coating liquid (IF-2) for interference layer formation

Coating liquid (IF-2) for interference layer formation was prepared by solving or dispersing 30 parts by mass of dipentaerythritol hexaacrylate, 20 parts by mass of tetramethylolmethane triacrylate, 50 parts by mass of tin oxide particles with an average particle size of 0.05 $\mu$m, and 2 parts by mass of photopolymerization initiator (trade name: "IRGACURE907", manufactured by Nihon-Ciba Geigy K.K.) in 1000 parts by mass of 2-butanol. A refractive index of the cured substance was 1.58.

Production example 1-3: Preparation of coating liquid (NIRA-1) for near-infrared ray absorption layer formation

Coating liquid NIRA-1 for near-infrared ray absorption layer formation was prepared by mixedly stirring and dissolving 3.2 parts by mass of diimonium salt compound (trade name: "KAYASORB IRG-022", manufactured by Nippon Kayaku Co., Ltd.), 0.5 parts by mass of fluorine-containing phthalocyanine group compound (trade name: "ExcolorIR-1", manufactured by NIPPON SHOKUBAI Co., Ltd.), and 1.6 parts by mass of dithiol metal complex group compound (trade name: "SIR-159", manufactured by Mitsui Chemicals, Inc.) as near-infrared ray absorption pigments, 440 parts by mass of linear saturated polyester resin (trade name: "Vylon 300", manufactured by Toyobo Co., Ltd.) as a binder, and 490 parts by mass of methyl ethyl ketone and 490 parts by mass of toluene as solvents.

Production example 1-4: Preparation of coating liquid (NIRA-2) for near-infrared ray absorption layer formation

Coating liquid NIRA-2 for near-infrared ray absorption layer formation was prepared by mixedly stirring and dissolving 3.2 parts by mass of diimonium salt compound (trade name: "KAYASORB IRG-022", manufactured by Nippon Kayaku Co., Ltd.), 0.5 parts by mass of fluorine-containing phthalocyanine group compound (trade name: "ExcolorIR-1", manufactured by NIPPON SHOKUBAI Co., Ltd.), 1.6 parts by mass of dithiol metal complex group compound (trade name: "SIR-159", manufactured by Mitsui Chemicals, Inc.), and 0.5 parts by mass of color tone correction pigment (trade name: "TY-167", manufactured by ADEKA CORPORATION) as near-infrared ray absorption pigments, 440 parts by mass of linear saturated polyester resin (trade name: "Vylon 300", manufactured by Toyobo Co., Ltd.) as a binder, and 490 parts by mass of methyl ethyl ketone and 490 parts by mass of toluene as solvents.

Production example 1-5: Preparation of coating liquid (HC-1) for hard coat layer formation

Coating liquid (HC-1) for hard coat layer formation was prepared by mixing 70 parts by mass of dipentaerythritol hexaacrylate, 30 parts by mass of 1, 6-bis-(3-acryloyloxy-2-hydroxypropyloxy-) hexane, 4 parts by mass of photopolymerization initiator (trade name: "IRGACURE184", manufactured by Nihon-Ciba Geigy K.K.), and 100 part by mass of isopropanol. A refractive index of the cured substance was 1.52.

Production example 1-6: Preparation of coating liquid (L-1) for low refractive index layer formation

Coating liquid (L-1) for low refractive index layer formation was prepared by mixing 70 part by mass of 1, 10-diacryloyloxy-2, 2, 3, 3, 4, 4, 5, 5, 6, 6, 7, 7, 8, 8, 9, 9-hexadecafluorodecane, 10 parts by mass of dipentaerythritol hexaacrylate, 60 parts by mass of silica gel particle dispersion liquid (trade name: "XBA-ST", manufactured by NISSAN CHEMICAL INDUSTRIES, LTD.), and 5 parts by mass of photopolymerization initiator (trade name: "KAYACURE BMS", manufactured by Nippon Kayaku Co., Ltd.). A refractive index of a cured polymer of the L-1 was 1.42.

Production example 1-7: Preparation of coating liquid (H-1) for high refractive index layer formation

Coating liquid (H-1) for high refractive index layer formation was prepared by mixing 85 parts by mass of ITO particles with an average particle size of 0.07 $\mu$m, 15 parts by mass of tetramethylolmethane triacrylate, 5 parts by mass of photopolymerization initiator (trade name: "KAYACURE BMS", manufactured by Nippon Kayaku Co., Ltd.), and 900 parts by mass of butylalcohol. A refractive index of a cured polymer of the H-1 was 1.64.

Example 1

A polyethylene terephthalate film containing an ultraviolet absorber (trade name: "HB3", manufactured by Teijin DuPont Films Japan Limited, 100 $\mu$m in thickness) was prepared. Coating liquid IF-1 for interference layer formation was coated on a whole surface of the PET film by a spin coater. A thickness of the layer was adjusted so that an optical film thickness might become 110 to 125 nm. After drying the coating liquid IF-1 for interference layer formation, the coating liquid IF-1 for interference layer formation was cured by radiating ultraviolet rays at 400 mJ/cm$^2$ under a nitrogen ambient atmosphere, and a first interference layer was formed.

On the first interference layer, coating liquid NIRA-1 for near-infrared ray absorption layer formation was coated by a bar coater. An amount of the coating liquid NIRA-1 was adjusted so that a drying film thickness might become at about 10 $\mu$m. The coating liquid NIRA-1 was dried at 90°C for 1 hour, and the laminated film 10 having the structure shown in Fig. 1(a) was produced. About the laminated film 10, spectral reflectance, total transmittance, haze values, degree of optical interference, appearance, and near-infrared transmittance were measured and evaluated. The results are shown in Table 1. Fig. 2 shows a reflectance curve of the laminated film 10 of a first example.

Example 2

Instead of the coating liquid NIRA-1 for near-infrared ray absorption, coating liquid NIRA-2 for near-infrared ray absorption was used. The laminated film 10 was produced under the same conditions as those in the first example except this. About the laminated film 10, spectral reflectance, total transmittance, haze values, degree of optical interference, appearance, and near-infrared transmittance were measured and evaluated similarly to those in the first example. The results are shown in Table 1.

Example 3

In the PET film of the laminated film of the first embodiment, coating liquid IF-2 for interference layer formation was coated on a surface opposite to the first interference layer by the spin coater so that an optical film thickness might become 110 to 125 nm. After drying the coating liquid IF-2 for interference layer formation, the coating liquid IF-2 for interference layer formation was cured by radiating ultraviolet rays at 400 mJ/cm$^2$ under a nitrogen ambient atmosphere, and a second interference layer was formed.

Coating liquid HC-1 for hard coat layer formation was coated on the second interference layer using a bar coater so that a drying film thickness might become about 5 $\mu$m. Ultraviolet rays at 400 mJ/cm$^2$ were radiated for a layer of the coating liquid HC-1 to be cured, and a hard coat layer was formed. Next, using a spin coater, coating liquid H-1 for high refractive indices was coated on the hard coat layer so that an optical film thickness might become 150 nm, and then, low refractive index layer coating liquid L-1 was coated so that an optical film thickness might become 150 nm.

Drying and curing were performed and a reflection-reducing layer was formed. Thus, the laminated film 10 shown in Fig. 1(b) was produced.

Spectral reflectance, minimum reflectance total transmittance, a haze value, degree of optical interference, appearance, and near-infrared transmittance of the laminated film 10 were measured and evaluated. The results are shown in Table 1 and Fig. 3.

Example 4

In the PET film of the laminated film of the second example, the reflection-reducing layer 18 was formed on a surface opposite to the near-infrared ray absorption layer in the procedure similar to that in the third example, and the laminated film 10 having reflection-reducing property was produced. About this laminated film 10, spectral reflectance, minimum reflection total transmittance, a haze value, degree of optical interference, appearance, and near-infrared transmittance were measured. The results are shown in Table 1.

Comparative example 1

A laminated film (not having the first interference layer 13) which was constructed of a PET film and a near-infrared ray absorption layer was produced, and spectral reflectance, total transmittance, a haze value, degree of optical interference, appearance, and near-infrared transmittance were measured. The results are shown in Table 1 and Fig. 4.

Comparative example 2

A laminated film (not having the first interference layer 13 and second interference layer 14) which was constructed of a PET film, a near-infrared ray absorption layer, and a reflection-reducing layer was produced, and spectral reflectance, minimum reflectance, total transmittance, a haze value, degree of optical interference, appearance, and near-infrared transmittance were measured. The results are shown in Table 1.

Table 1

|  | Examples | | | | Comparative examples | |
|---|---|---|---|---|---|---|
|  | 1 | 2 | 3 | 4 | 1 | 2 |
| transparent resin film | PET | PET | PET | PET | PET | PET |
| refractive index ($n_s$) | 1.65 | 1.65 | 1.65 | 1.65 | 1.65 | 1.65 |
| near-infrared ray absorption layer | NIRA-1 | NIRA-2 | NIRA-1 | NIRA-2 | NIRA-1 | NIRA-1 |
| refractive index ($n_{NIRA}$) | 1.60 | 1.60 | 1.60 | 1.60 | 1.60 | 1.60 |
| $(n_s \times n_{NIRA})^{1/2}$ | 1,62 | 1.62 | 1.62 | 1.62 | 1.62 | 1.62 |
| 1st interference layer | IF-1 | IF-1 | IF-1 | IF-1 | none | none |
| refractive index ($n_{I1}$) | 1.61 | 1.61 | 1.61 | 1.61 | - | - |
| hard coat layer | none | none | HC-1 | HC-1 | none | HC-1 |
| refractive index ($n_{HC}$) | - | - | 1.52 | 1.52 | - | 1.52 |
| $(n_s \times n_{HC})^{1/2}$ | - | - | 1.58 | 1.58 | - | 1.58 |
| 2nd interference layer | none | none | IF-2 | IF-2 | none | none |
| refractive index ($n_{I2}$) | - | - | 1.58 | 1.58 | - | - |
| high refractive index layer | none | none | H-1 | H-1 | none | H-1 |
| low refractive index layer | none | none | L-1 | L-1 | none | L-1 |
| minimum refractive index | - | - | 0.3 | 0.3 | - | 0.4 |
| total transmittance (%) | 77 | 55 | 78.5 | 56 | 77 | 78.5 |
| haze (%) | 0.5 | 0.5 | 0.4 | 0.4 | 0.5 | 0.4 |
| degree of interference (%) | 0.8 | 0.8 | 0.3 | 0.3 | 1.5 | 1.5 |

(continued)

| | Examples | | | | Comparative examples | |
|---|---|---|---|---|---|---|
| | 1 | 2 | 3 | 4 | 1 | 2 |
| appearance | ○ | ○ | ○ | ○ | × | × |
| transmittance (%) at 850nm | 10.1 | 9.5 | 10.2 | 9.6 | 5.0 | 5.0 |
| transmittance (%) at 950nm | 5.0 | 4.6 | 4.8 | 4.6 | 5.0 | 5.0 |
| transmittance (%) at 1100nm | 3.1 | 2.8 | 3.0 | 2.9 | 3.0 | 2.9 |

From the results shown in Table 1, it was confirmed that near-infrared ray was satisfactory absorbed since the transmittance of the near-infrared ray having wavelengths of 850 to 1100 nm was 2.8 to 10.2% in the first to fourth examples. Since the laminated films in the first to fourth examples include the first and second interference layers having suitable refractive indices, and the degree of optical interference is 0.8% or less, uneven optical interference is reduced and they have excellent appearance.

On the contrary, in the laminated films of the first and second comparative examples, since the degree of optical interference was 1.5% and optical interference was large, they have appearance of interference fringes being conspicuous.

As shown in Figs. 2 and 3, in the laminated films in the first and third examples, maximum values of peak-to-peak amplitude of reflectance curves in a wavelength range of 500 to 650 nm are 0.8% and 0.3% respectively. Optical interference unevenness was reduced and appearance was satisfactory.

On the other hand, in the first comparative example in Fig. 4, a maximum value of the peak-to-peak amplitude of the reflectance curve in a wavelength range of 500 to 650 nm was 1.5%. Optical interference unevenness was not reduced and appearance was not good.

Examples 5 and 6

Acrylic base pressure sensitive adhesive sheets (product name: "NON-CARRIER", manufactured by Lintec Corp.) were attached on the near-infrared ray absorption layers of the laminated films in the third and fourth examples using the hand roller. The laminated films in the third and fourth examples were directly attached on the surface of a plasma display through the adhesive sheets. Appearance by degree of optical interference and interference unevenness at the time of a display device being turned off was evaluated. The results are shown in Table 2.

The degree of optical interference was evaluated by measuring spectral reflectance in a state where the laminated film having reflection-reducing property was attached on the display device, by a spectral reflectometer ("URE-30" manufactured by USHIO INC.), and reading a reflectance width of interference in the vicinity of 600 nm. The appearance by optical interference was evaluated by observing the display device under a three-wavelength fluorescent lamp, and classified the observing results in two grades: O (good) when the interference unevenness was hardly conspicuous and × (poor) when it was recognized clearly.

Comparative example 3

The laminated film of the comparative example 2 was attached on a plasma display similarly to the fifth and sixth examples. Appearance by degree of optical interference and interference unevenness at the time of a display device being turned off was evaluated. The results are shown in Table 2.

Table 2

| | Examples | | Comparative example |
|---|---|---|---|
| | 5 | 6 | 3 |
| transparent resin film | PET | PET | PET |
| degree of optical interference (%) | 0.3 | 0.3 | 1.5 |
| appearance | O | O | × |

As shown in Table 2, in the fifth and sixth examples, when the laminated film is adhered on a screen, reflection on a surface of the screen was satisfactory suppressed, and it was a very clear and obvious image. The interference unevenness was hardly recognized also at the time of the plasma display device being turned off, and good appearance was shown. On the other hand, since an interference layer was not provided in the third comparative example, interference unevenness at the time of the display device being turned off was greatly conspicuous for appearance to be poor.

It is also sufficient to form a structure for reducing interference unevenness, such as a minute bump, on a surface of the near-infrared ray absorption layer 12 or reflection-reducing layer 18.

**Claims**

1.  A near-infrared ray absorptive laminated film comprising:

    a transparent resin film;
    a first interference layer laminated on a surface of the transparent resin film; and
    a near-infrared ray absorption layer laminated on the first interference layer,
    the laminated film **characterized in that** the near-infrared ray absorptive film has a reflectance spectrum expressed by a ripple-like reflectance curve having peak-to-peak amplitude, wherein a maximum value of the peak-to-peak amplitude is 1% or less in a wavelength range of 500 to 650 nm.

2.  The laminated film according to claim 1, wherein:

    the transparent resin film has a refractive index ($n_s$) of 1.55 to 1.70;
    the near-infrared ray absorption layer has a refractive index ($n_{NIRA}$) of 1.45 to 1.65, and a film thickness of 2 to 20 $\mu$m;
    the first interference layer has an optical film thickness of 125 to 165 nm and a refractive index ($n_{I1}$) expressed by the following formula:

    $$n_{I1} = (n_s \times n_{NIRA})^{1/2} \pm 0.03$$

    wherein the refractive index of the first interference layer is a middle value between the refractive index of the transparent resin film and the refractive index of the near-infrared ray absorption layer.

3.  The laminated film according to claim 1 or 2, wherein the transparent resin film is a polyethylene terephthalate film having a film thickness of 25 to 400 $\mu$m.

4.  The laminated film according to any one of claims 1 to 3, wherein the transparent resin film contains an ultraviolet absorber, and transmittance of the transparent resin film to ultraviolet ray at 380 nm or less is 5% or less.

5.  The laminated film according to any one of claims 1 to 4, wherein the near-infrared ray absorption layer contains a pigment that corrects color tone.

6.  The laminated film according to any one of claims 1 to 5, further comprising:

    a second interference layer laminated on a backside of the transparent resin film;
    a hard coat layer laminated on the second interference layer; and
    a reflection-reducing layer laminated on the hard coat layer.

7.  The laminated film according to claim 6, wherein:

    the hard coat layer has a refractive index ($n_{HDC}$) of 1.45 to 1.55, and a film thickness of 1 to 20 $\mu$m;
    the second interference layer has an optical film thickness of 125 to 165 nm and a refractive index ($n_{I2}$) expressed by the following formula:

    $$n_{I2} = (n_s \times n_{HDC})^{1/2} \pm 0.03$$

    and wherein the refractive index ($n_{I2}$) of the second interference layer is a middle value between the refractive

index ($n_s$) of the transparent resin film and a refractive index of the hard coat layer.

8. A display device, comprising a screen to which the laminated film according to any one of claims 1 to 7 is attached.

9. The display device according to claim 8, wherein the near-infrared ray absorption layer of the laminated film is attached on the screen.

# Fig. 1(a)

10

12
13
11

# Fig. 1(b)

10

12
13
11
14
15
16
17 } 18

# Fig. 2

Reflectivity
(%)

10
9
8
7
6
5
4
3
2
1
0

0.8%

400        500        600        700        800

Wavelength (nm)

# Fig. 3

# Fig. 4

**INTERNATIONAL SEARCH REPORT**

| International application No. |
| --- |
| PCT/JP2005/014183 |

A. CLASSIFICATION OF SUBJECT MATTER
*G02B5/22* (2006.01), *G02B1/11* (2006.01), *G02B1/10* (2006.01),
*G09F9/00* (2006.01), *H01J11/02* (2006.01)

According to International Patent Classification (IPC) or to both national classification and IPC

B. FIELDS SEARCHED

Minimum documentation searched (classification system followed by classification symbols)
*G02B5/22* (2006.01), *G02B1/11* (2006.01), *G02B1/10* (2006.01),
*G09F9/00* (2006.01), *H01J11/02* (2006.01)

Documentation searched other than minimum documentation to the extent that such documents are included in the fields searched
Jitsuyo Shinan Koho          1922-1996   Jitsuyo Shinan Toroku Koho   1996-2005
Kokai Jitsuyo Shinan Koho    1971-2005   Toroku Jitsuyo Shinan Koho   1994-2005

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
| --- | --- | --- |
| Y | JP 11-73115 A  (Nippon Sheet Glass Co., Ltd.), 16 March, 1999 (16.03.99), Full text; all drawings (Family: none) | 1-8 |
| Y | JP 2002-267804 A  (Tore Firumu Kako Kabushiki Kaisha), 18 September, 2002 (18.09.02), Full text; all drawings (Family: none) | 1-8 |
| Y | JP 2003-29027 A  (Tokai Kogaku Kabushiki Kaisha), 29 January, 2003 (29.01.03), Full text; all drawings (Family: none) | 1-8 |

☒  Further documents are listed in the continuation of Box C.        ☐  See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| 27 October, 2005 (27.10.05) | 08 November, 2005 (08.11.05) |

| Name and mailing address of the ISA/ | Authorized officer |
| --- | --- |
| Japanese Patent Office | |
| Facsimile No. | Telephone No. |

Form PCT/ISA/210 (second sheet) (April 2005)

17

**INTERNATIONAL SEARCH REPORT**

International application No.

PCT/JP2005/014183

C (Continuation).   DOCUMENTS CONSIDERED TO BE RELEVANT

| Category* | Citation of document, with indication, where appropriate, of the relevant passages | Relevant to claim No. |
|---|---|---|
| Y | JP 10-230558 A  (Asahi Glass Co., Ltd.),<br>02 September, 1998 (02.09.98),<br>Par. No. [0079]; Fig. 3<br>& US 5976684 A1        & EP 854202 A2 | 1-8 |

Form PCT/ISA/210 (continuation of second sheet) (April 2005)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 11305033 A